# EUROPEAN PATENT APPLICATION

(11) **EP 4 703 640 A1**
(43) Date of publication of application: **04.03.2026**
(21) Application number: 25194876.6
(22) Date of filing: 08.08.2025
(51) Int. Cl.: F23D 14/64, F16L 25/08, F16L 37/02, F23K 5/00, F24C 3/12

(54) **GAS COOKING APPLIANCE WITH GAS INLET CONNECTOR**

(30) Priority: 03.09.2024 EP 24382949
(71) Applicant: BSH Hausgeräte GmbH, 81739 München (DE)
(72) Inventor: Gonzalez Moujir, Eva, New Bern, 28562 (US); Blanco Garay, Ricardo, 39612 Parbayón, Piélagos, Cantabria (ES)

(57) **Abstract**

The invention relates to a gas cooking appliance (10) comprising a main gas inlet pipe (4) for channelling gas to at least one gas tap (6), a gas burner (7) connected to the gas tap (6) by means of a secondary gas pipe (8) and a gas inlet connector (1) for connecting the main gas inlet pipe (4) to a gas supply grid pipe (5), wherein the gas inlet connector (1) has, at one end, a coupling part (2) connectable to a grid pipe outlet (51) of the gas supply grid pipe (5) and, at the other end, a connector part (3) removably connected to a main gas inlet pipe end (41), wherein the connector part (3) has a cylindrical outer wall provided with at least one sealing slot (31) with a sealing gasket (32) in a circumferential direction. For a quick and reliable connection, the main gas inlet pipe end (41) is cylindrical with a circular-section gas passageway (42) and the connector part (3) is press-fitted into the gas passageway (42) being rotatable about the shaft (43) of the main gas inlet pipe end (41).

## Description

### TECHNICAL FIELD

The invention relates to the technical field of gas cooking appliances comprising a main gas inlet pipe for channelling gas to at least one gas tap, a gas burner connected to the gas tap by means of a secondary gas pipe and a gas inlet connector for connecting the main gas inlet pipe to a gas supply grid pipe.

### STATE OF THE ART

Patent JP52006819 U1 discloses a main gas inlet pipe for a gas appliance and a gas inlet connector for connecting the end of the main gas inlet pipe to a grid pipe outlet of a gas supply grid pipe, wherein the gas inlet connector has, at one end, a coupling part connectable to the grid pipe outlet of the gas supply grid pipe and, at the other end, a connector part into which the end of the main gas inlet pipe is inserted, wherein the end of the main gas inlet pipe has two rings shaped on its outer surface between which a stop is fitted extending through the wall of the connector part. In this manner, the gas inlet connector can rotate about the shaft of the end of the main gas inlet pipe but its linear movement is blocked. Furthermore, the end of the main gas inlet pipe has a sealing gasket between the ring arranged deeper inside the connector part and an inner wall of the connector part.

This connection between the main gas inlet pipe and the grid pipe outlet of a gas supply grid pipe is complex since the main gas inlet pipe needs to be deformed to make the rings on its outer surface so precisely that the sealing gasket remains arranged and pressed between the ring and the inner wall of the connector part, gas leakages being thereby avoided.

### DESCRIPTION OF THE INVENTION

A technical problem solved by this invention is to provide a gas cooking appliance with a more reliable and simplified connection to the gas grid.

To solve the preceding technical problem, this application provides a gas cooking appliance comprising a main gas inlet pipe for channelling gas to at least one gas tap, a gas burner connected to the gas tap by means of a secondary gas pipe and a gas inlet connector for connecting the main gas inlet pipe to a gas supply grid pipe, wherein the gas inlet connector has, at one end, a coupling part connectable to a grid pipe outlet of the gas supply grid pipe and, at the other end, a connector part removably connected to a main gas inlet pipe end.

For a more simple and reliable connection, between the main gas inlet pipe and the grid pipe outlet of a gas supply grid pipe it is provided that the connector part has a cylindrical outer wall provided with at least one sealing slot with a sealing gasket in a circumferential direction, and the main gas inlet pipe end is cylindrical with a circular-section gas passageway and the connector part is press-fitted into the gas passageway being rotatable about the shaft of the main gas inlet pipe end.

The type of a plug connection is a press fit in the direction of the shaft of the main gas inlet pipe end in such a manner that the outer wall of the connector part is substantially contacting the inner wall of the main gas inlet pipe end and the sealing gasket inside the sealing slot is deformed and presses the inner wall of the main gas inlet pipe end.

The gas cooking appliance is a gas appliance that can be autonomous or a part of a gas or electric stove. The gas cooking appliance has a generally metallic housing inside which the components of the appliance are arranged and enclosed inside the appliance when the housing is closed with the cooking surface.

The cooking vessels resting on the cooking hobs arranged on the pan supports can be placed on the cooking surface. The cooking hobs have a gas burner and a flame diffuser and the gas reaches the cooking hobs through the secondary gas pipes. The secondary gas pipes are connected to the gas taps, which are operated by the user. The gas taps are connected to the main gas inlet pipe. The main gas inlet pipe is a metal pipe, which is mostly arranged inside the appliance and the main gas inlet pipe end protrudes from the housing. The main gas inlet pipe end has the shape of a cylindrical pipe having a circular outer and inner section of the gas passageway. The diameter of the section of the connector part of that of the gas passageway is substantially the same, with a diameter of the connector part slightly smaller than the diameter of the gas passageway in such a manner that the coupling between both of them is as precise as possible, differing from one another in the range of millimetre tenths or hundredths. This connection between the gas inlet connector and the gas inlet pipe end is a quick and reliable connection of the appliance to the grid pipe outlet of the gas supply grid pipe of the gas grid.

The gas grid may be a stand-alone gas bottle as well. The gas supply grid pipe can be made of metal or be a hose at its end.

The gas inlet connector is a preferably metal and preferably L-shaped tube since, in this manner, given that the gas inlet connector can rotate about the shaft of the inlet pipe end, the position of the coupling part may vary, thereby helping the connection to the grid pipe outlet.

The connector part has a cylindrical outer surface and at least one ring-shaped sealing slot into which a sealing gasket is press-fitted. The sealing gasket arranged in the slot protrudes from the outer surface of the connector part slightly. In preferred configurations, the cylindrical outer surface of the connector part has more than one ring-shaped sealing slot with corresponding sealing gaskets mounted. In this manner, the tightness and safety of the connection are improved.

In an embodiment of the invention, the main gas inlet pipe end is provided with an opening formed through its circumferential wall, the outer wall of the connector part is provided with a ring-shaped slot in the circumferential direction, a stop is mounted in the opening, and the stop extends partially into the ring-shaped slot. The circumferential wall of the main gas inlet pipe end is cylindrical and the opening extends through the same, preferably in a perpendicular manner. The outer wall of the connector part is cylindrical as well and its diameter is substantially the same as that of the connector part and the ring-shaped slot has an even smaller diameter so, when the connector part is inserted in the main gas inlet pipe end and the ring-shaped slot is located at the same height as the opening, the stop is mounted into the opening extending through the circumferential wall of the main gas inlet pipe end and is fitted into the ring-shaped slot. In this manner, the main gas inlet pipe end and the connector part cannot be separated from each other since the linear movement relative to each other is blocked by the stop but they can be freely rotated when the stop, fixed in the opening, can be slid over the ring-shaped slot. When the ring-shaped slot is facing the opening, the at least one ring-shaped sealing slot with its sealing gasket is arranged inside the gas passageway of the main gas inlet pipe end and, preferably, the ring-shaped slot is located in a closer position to the outer final end of the main gas inlet pipe end in such a manner that the at least one ring-shaped slot is located deeper inside the main gas inlet pipe end.

The dimension of the diameter of the connector part depends on the dimensions that the manufacturer of the sealing gasket advises for the correct operation of this. Usually the manufacturer represents it in a table where they relate the size of the gasket and its degree of compression.

In another configuration, the outer wall of the connector part is provided with at least two ring-shaped sealing slots, and the sealing gasket is an O-shaped sealing gasket. An improved tightness is thereby guaranteed. In this case, it is also possible that, if there is more than one sealing slot, the ring-shaped slot is arranged between two sealing slots.

Optionally, the opening is a circular orifice and the stop member is a screw, or the opening is an arc-shaped opening, and the stop rod is a clamp.

In another embodiment, it is provided that the outer wall of the connector part is provided with a ring-shaped slot in the circumferential direction and that the main gas inlet pipe end is provided with a notch formed as a deformation of the circumferential wall extending into the gas passageway to be fitted into the ring-shaped slot partially. In this case, the connection between the connector part and the main gas inlet pipe end can be disassembled but in a more complicated manner since the wall of the main gas inlet pipe end needs to be deformed.

The coupling part of the gas inlet connector can be made in different manners depending on the type of the gas supply grid pipe. If the grid pipe outlet of the gas supply grid pipe is rigid, it will have a nut with a female thread as a fixing element of gas supply grid pipe, and the coupling part will have a thread screwable on the thread of the fixing element of gas supply grid pipe of the gas supply grid pipe.

On the other hand, if the grid pipe outlet of the gas supply grid pipe is flexible/elastic, the coupling part will be provided with a plug into which the grid pipe outlet can be press-fitted. In this case and to improve the tightness of the connection, it is provided that the plug has at least one non-return element and, for a higher safety, the connection can be reinforced even with a clamp pressing around the grid pipe outlet against the plug.

### DESCRIPTION OF THE FIGURES

An exemplary embodiment of the invention is represented in the figures. These show:
Fig. 1 is a plan view of a gas cooking appliance with a gas inlet connector;
Fig. 2 is a perspective view of a housing of a gas cooking appliance with a gas inlet connector;
Fig. 3 is a perspective view of a gas inlet connector connected to a main gas inlet pipe;
Fig. 4a is a section of a gas inlet connector connected to a main gas inlet pipe;
Fig. 4b is a perspective view of a gas inlet connector connected to a cut main gas inlet pipe; and
Fig.5 is a section of a gas inlet connector connected to a main gas inlet pipe.

### DESCRIPTION OF THE PREFERRED EMBODIMENT

To make the objectives, features and beneficial effects of this invention more understandable, the particular embodiments of this application are described in detail subsequently with reference to the accompanying drawings.

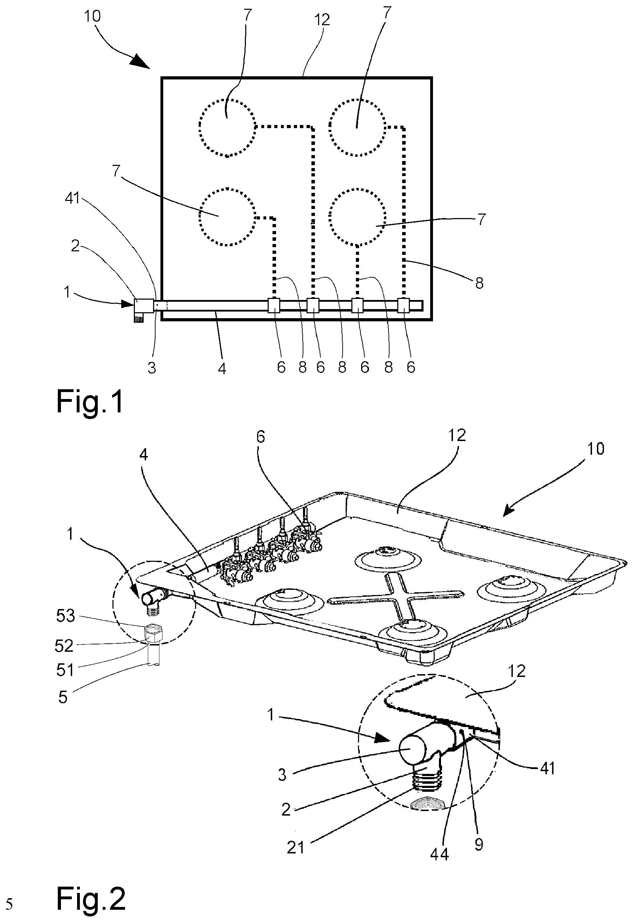

Figure 1 shows a gas cooking appliance 10 schematically, mainly its gas supply system of an external gas grid. The gas cooking appliance 10 has a housing 12 in which all the components of the appliance are mounted. The main gas inlet pipe 4 arranged inside the housing 12 protrudes outwardly from the housing 12 through a window providing it with access into the gas cooking appliance 10 and extends over an inner lateral side of the housing 12. Four gas taps 6 regulating the gas flow-through from the main gas inlet pipe 4 to the gas burners 7 through secondary gas pipes 8 are connected to the main gas inlet pipe 4.

The part of the main gas inlet pipe 4 protruding outwardly from the housing 12 is the main gas inlet pipe end 41 and the connector part 2 of a gas inlet connector 1 is fixed to the same. The gas inlet connector 1 is L-shaped and it has a coupling part 3 with a thread 21 at its free end. A surface plate closes the housing 12, the components of the gas cooking appliance 10 remaining inside the same.

Figure 2 shows in a perspective view a part of the gas cooking appliance 10 from figure 1 with the housing 12 containing the components of the appliance, in which the four gas taps 6 can be seen connected to the main gas inlet pipe 4. The main gas inlet pipe 4 has a main gas inlet pipe end 41 protruding from a window of the housing 12. The gas inlet connector 1 is connected to the main gas inlet pipe end 41. The main gas inlet pipe end 41 has an opening 44 through which the screw-like stop 9 extends to fix the connector part 3 of the gas inlet connector 1 to the main gas inlet pipe 4. The gas inlet connector 1 is L-shaped and, at the end facing away from the connector part 3, the coupling part 2 is arranged with a thread 21 to which the female thread 53 of the fixing element of gas supply grid pipe 52 located at the grid pipe outlet 51 of the gas supply grid pipe 5 can be screwed, which can be seen facing the thread 21 of the coupling part 2 in figure 2. In the same figure 2, an enlarged detail of the gas inlet connector 1 connected to the main gas inlet pipe end 41 protruding from the housing 12 is shown.

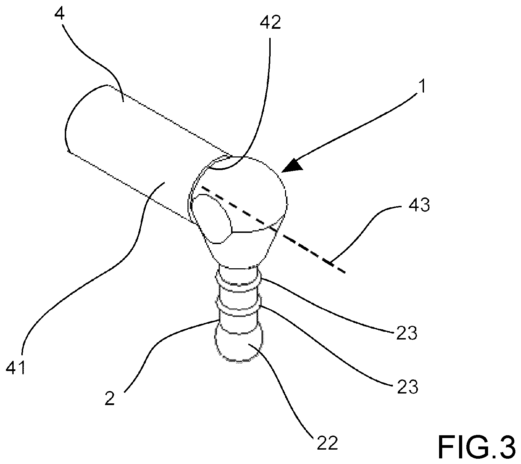

Figure 3 shows the main gas inlet pipe 4 with the gas inlet connector 1 inserted in the gas passageway 42 of the main gas inlet pipe end 41. In this case, just the pressure exerted by the sealing gasket 32 placed in the sealing slot 31 of the connector part 3 is enough to secure the position of the gas inlet connector 1 in the main gas inlet pipe end 41. The gas inlet connector 1 is L-shaped and is connected being rotatable about the main shaft 43 of the main gas inlet pipe end 41 in such a manner that the coupling part 2 can be led to any position of the perpendicular plane to the shaft 43 and so lead the plug 22 to the gas supply grid pipe. The plug 22 of the coupling part 2 has non-return elements 23 to fix the grid pipe outlet of the gas supply grid pipe correctly and without any gas leakages.

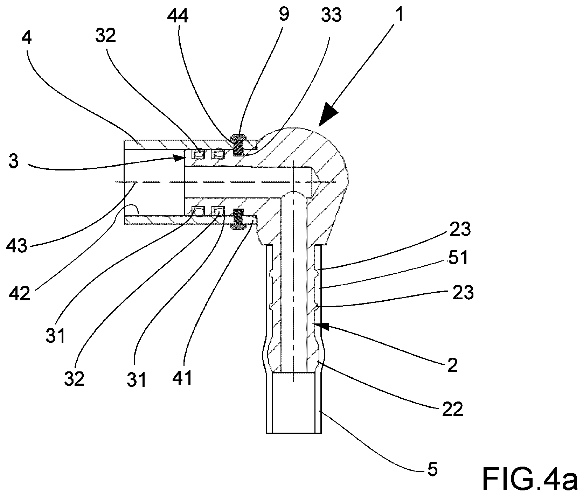

Figure 4a shows a section of a particular configuration of the connection of the gas inlet connector 1 to the main gas inlet pipe end 41 from figure 3 with the difference that the fixation between them is improved. The connector part 3 inserted in the gas passageway 42 of the main gas inlet pipe end 41 is shown in the section. The connector part 3 has two sealing slots 31 with their sealing gaskets 32 to prevent gas from leaking between the outer wall of the connector part 3 and the inner wall of the gas passageway 43 of the main gas inlet pipe end 41. In contrast to the configuration from figure 3, the connector part 3 has a ring-shaped slot 33 into which an end of a stop 9 in the form of a screw is fitted and extends through the wall of the main gas inlet pipe end 41 through the opening 44. Like in figure 3, the gas inlet connector 1 is L-shaped and, at its coupling part 2, it has a plug 22 into which the grid pipe outlet 51 of the gas supply grid pipe 5 is inserted. In this case, the grid pipe outlet 51 is made of an elastic material that is demored and molded under pressure on the plug 2 and is retained with the non-return elements 23.

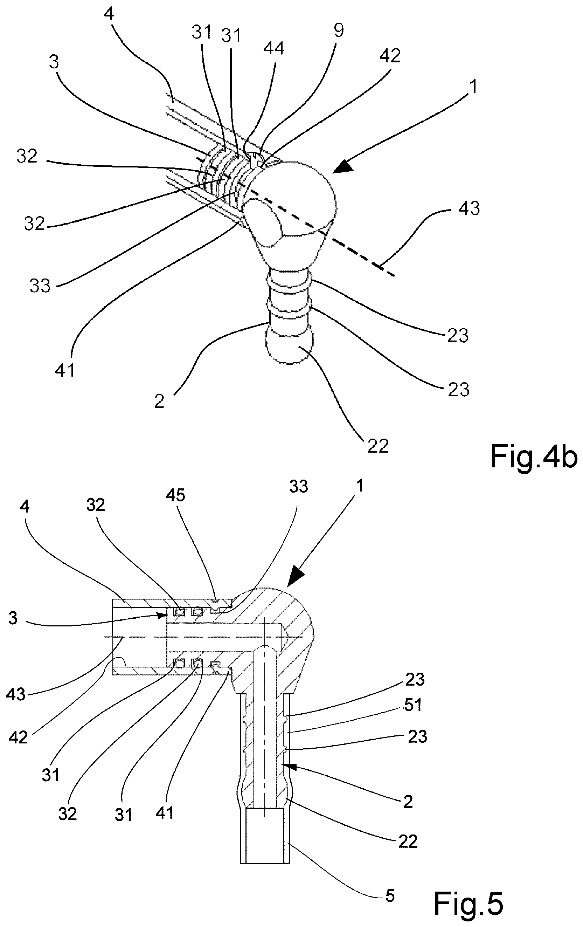

Figure 4b shows a perspective view of the connection of the gas inlet connector 1 to the main gas inlet pipe end 41 from figure 4a with the difference that the main gas inlet pipe end 41 has a section allowing the part of the connector part 3 with its sealing slots 31 with their sealing gaskets 32 and the ring-shaped slot 33 into which the stop 9 extending through the wall of the main gas inlet pipe end 41 through the opening 44 is inserted to be seen.

And, finally, figure 5 shows a section of a particular configuration of the connection of the gas inlet connector 1 to the main gas inlet pipe end 41 from figure 3 with the difference that the fixation between them is improved with a connection different from that from figures 3, 4a and 4b. The connector part 3 inserted in the gas passageway 42 of the main gas inlet pipe end 41 is shown in the section. The connector part 3 has two sealing slots 31 with their sealing gaskets 32 to prevent gas from leaking between the outer wall of the connector part 3 and the inner wall of the gas passageway 43 of the main gas inlet pipe end 41. In contrast to the configuration from figures 4a and 4b, the wall of the main gas inlet pipe end 41 is deformed forming a notch 45 in the area of the ring-shaped slot 33 extending into the same in such a manner that a 360° rotation of the gas inlet connector 1 about the shaft 43 is allowed to position the plug 22 of the coupling part 2 in the best position to insert the grid pipe outlet 51 of the gas supply grid pipe 5, which is made with an elastic material too in this case. Like in the configuration from figure 4a and 4b, the gas inlet connector 1 can rotate about the shaft 43 but cannot be displaced in the direction of the shaft 43. In the configuration from figures 4a and 4b, to separate the gas inlet connector 1 from the gas passageway 42 of the main gas inlet pipe end 41, it is just necessary to remove the stop 9. In the configuration from figure 5, it can be removed by deforming the notch 45 to let the rest of the connector part 3 in.

### Reference numerals

- 1: gas inlet connector
- 2: coupling part
- 21: thread
- 22: plug
- 23: non-return element
- 3: connector part
- 31: sealing slot
- 32: sealing gasket
- 33: ring-shaped slot
- 4: main gas inlet pipe
- 41: main gas inlet pipe end
- 42: gas passageway
- 43: shaft
- 44: opening
- 45: notch
- 5: gas supply grid pipe
- 51: grid pipe outlet
- 52: fixing element of gas supply grid pipe
- 53: female thread
- 6: gas tap
- 7: gas burner
- 8: secondary gas pipe
- 9: stop
- 10: gas cooking appliance
- 12: housing

## Claims

1. A gas cooking appliance (10) comprising a main gas inlet pipe (4) for channelling gas to at least one gas tap (6), a gas burner (7) connected to the gas tap (6) by means of a secondary gas pipe (8) and a gas inlet connector (1) for connecting the main gas inlet pipe (4) to a gas supply grid pipe (5), wherein the gas inlet connector (1) has,
at one end, a coupling part (2) connectable to a grid pipe outlet (51) of the gas supply grid pipe (5)
and, at the other end, a connector part (3) removably connected to a main gas inlet pipe end (41),
**characterised in that** the connector part (3) has a cylindrical outer wall provided with at least one sealing slot (31) with a sealing gasket (32) in a circumferential direction, and
the main gas inlet pipe end (41) is cylindrical with a circular-section gas passageway (42) and the connector part (3) is press-fitted into the gas passageway (42) being rotatable about the shaft (43) of the main gas inlet pipe end (41).

2. The gas cooking appliance according to claim 1, **characterised in that** the main gas inlet pipe end (41) is provided with an opening (44) formed through its circumferential wall, the outer wall of the connector part (3) is provided with a ring-shaped slot (33) in the circumferential direction, a stop (9) is mounted in the opening (44), and the stop (9) extends partially into the ring-shaped slot (33).

3. The gas cooking appliance according to claim 2, **characterised in that** the opening (44) is a circular orifice and the stop (9) is a screw.

4. The gas cooking appliance according to claim 2, **characterised in that** the opening (44) is an arc-shaped opening and the stop (9) is a clamp.

5. The gas cooking appliance according to any of the preceding claims, **characterised in that** the outer wall of the connector part (3) is provided with at least two ring-shaped sealing slots (31) with respective sealing gaskets (32).

6. The gas cooking appliance according to claim 1, **characterised in that** the outer wall of the connector part (3) is provided with a ring-shaped slot (33) in the circumferential direction and **in that** the main gas inlet pipe end (41) is provided with a notch (45) formed as a deformation of the circumferential wall extending into the gas passageway (42) to be fitted into the ring-shaped slot (33) partially.

7. The gas cooking appliance according to any of the preceding claims, **characterised in that** the coupling part (2) has a thread (21) screwable to a fixing element of gas supply grid pipe (52) arranged in the grid pipe outlet (51).

8. The gas cooking appliance according to any of claims 1 a 6, **characterised in that** the coupling part (2) is provided with a plug (22), the grid pipe outlet (51) of the gas supply grid pipe (5) is a pipe of an elastic material that can be press-fitted into the plug (22).

9. The gas cooking appliance according to claim 8, **characterised in that** the plug (22) has at least one non-return element (23).

10. The gas cooking appliance according to claim 8 or 9, **characterised in that** a clamp can be installed to press fit the grid pipe outlet (51) to the plug (22).
